# EUROPÄISCHE PATENTANMELDUNG

(11) **EP 1 180 611 A1**
(43) Veröffentlichungstag der Anmeldung: **20.02.2002**
(21) Anmeldenummer: 01118007.2
(22) Anmeldetag: 25.07.2001
(51) Int. Cl.: F16D 1/02, F16D 1/08

(54) **Lösbare Verbindung von zylindrischen Hohlwellen**

(30) Priorität: 16.08.2000 DE 10039873
(71) Anmelder: SMS Demag AG, 40237 Düsseldorf (DE)
(72) Erfinder: Grimmel, Rüdiger, 57250 Netphen (DE)
(74) Vertreter: Valentin, Ekkehard, Dipl.-Ing.

(57) **Zusammenfassung**

Eine lösbare Verbindung von zylindrischen Hohlwellen (HW; RH) deren Stirnenden Ringflansche (RFH; RFR) aufweisen, die, einander überlappend in Richtung der Wellenasche ineinander steckbar sind. In den innen liegenden Ringflanschen (RFH) der beiden Ringflanschen (RFH; RFR) sind zwei oder mehr Riegelbolzen (RB) radial verschiebbar angeordnet und in den außen liegenden Ringflanschen sind den jeweiligen Riegelenden (RE) der Riegelbolzen (RB) zugewandte, diese aufnehmende, beidseitig offene Riegelbuchsen (RBU) die den zugeordnet sind. Das andere Ende der Riegelbolzen (RB) ist in den innen liegenden Ringflanschen (RFH) gewindegeführt und der Riegelbolzen weist zwischen seinen beiden Enden ein Umfangsritzel (UFR) auf dessen Zähne mit den Zähnen eines, in dem innen liegenden Ringflansch (RFH) drehgelagerten, seitenverzahnten Drehrings (DR) kronenverzahnt kämmen. Die nach außen weisenden Stirnseiten der Riegelenden (RBE) der Riegelbolzen weisen Schloßausnehmungen (SA) für das Einsetzen von Drehwerkzeugen (DW) zur Drehung der Riegelbolzen um deren Längsachse auf.

## Beschreibung

Die Erfindung betrifft eine lösbare Verbindung von zylindrischen Hohlwellen, deren Stimenden Ringflansche aufweisen die einander überlappend in Richtung der Wellenachse ineinander steckbar sind.

Verbindungen dieser Art bestehen durchweg aus, in die überlappenden Ringflansche eingesetzten Schraub- oder Klemmverbindungen. Der wesentliche Nachteil dieser Verbindungsart besteht darin, daß das Einsetzen der entsprechenden Schraub- oder Klemmelemente einen erheblichen manuellen Aufwand und, je nach der Anordnung und Qualität der Verbindung auch entsprechender Erfahrungen bedarf. Hinzu kommt, daß je nach den baulichen Verhältnissen die überlappenden Ringflansche nicht um ihren Umfang herum für solche Arbeiten ohne weiteres zugänglich sind.

Der Erfindung liegt die Aufgabe zugrunde, eine Verbindung der in Rede stehenden Art zu schaffen, die einfach herzustellen und zu lösen ist und keiner besonderen Erfahrung des Bedienungspersonals bedarf sowie auch keiner ungehinderten Zugänglichkeit der zu verbindenden Ringflansche um deren gesamten Umfang herum bedarf.

Diese Aufgabe wird dadurch gelöst, daß in dem innen liegenden Ringflansch der beiden Ringflansche zwei oder mehr Riegelbolzen radial verschiebbar und in dem außen liegenden Ringflansch, dem jeweiligen Riegelende der Riegelbolzen zugeordnete, diese aufnehmende, beidseitig offene Riegelbüchsen zugeordnet sind, und daß das andere Ende der Riegelbolzen in dem innen liegen Ringflansch gewindegeführt ist, und der Ringelbolzen zwischen seinen beiden Enden ein Umfangsritzel aufweist, dessen Zähne mit den Zähnen eines, in dem innen liegenden Ringflansch drehgelagerten, seitenverzahnten Drehrings kronenverzahnt kämmen, wobei die, nach außen weisenden Stirnseiten der Riegelzapfenenden der Riegelbolzen Schloß-Ausnehmungen für das Einsetzen von Werkzeugen zur Drehung der Riegelbolzen um deren Längsachse aufweisen.

Mit dieser Lösung können alle Riegelbolzen gleichzeitig durch Einsatz des Werkzeuges in einen der Riegelbolzen und dessen Drehen über den, mit den Umfangsritzeln aller Riegelbolzen trimmenden Drehring betätigt also in Riegel- bzw. Entriegelungsposition gebracht werden d. h. auch solche Riegelbolzen, die für sich gesehen schwer zugänglich sind.

Die erfindungsgemäße Lösung eignet sich auch zur Anwendung bei Windungslegem für, aus einer Walzdrahtstraße heran geführten Walzdraht, der aus einer, rotierend angetriebenen Hohlwelle und einem, stirnseitig, lösbar mit dieser Hohlwelle gekuppelten zylinder- oder trichterförmigen Rohrhalter besteht, in dem der Walzdraht mit Hilfe eines, in diesem angeordneten spiralförmigen Legerohrs zu aufeinanderfolgenden Drahtwindungen geformt wird, Hohlwelle und Rohrhalter einander überlappende Ringflansche aufweisen wobei die Riegelbolzen und der, mit deren Umfangszahnrad kämmende Drehring in dem Ringflansch der Hohlwelle und die Riegelbuchsen in dem Ringflansch des Rohrhalters angeordnet sind.

Dabei diesen Windungslegern der, das Legerohr tragende Rohrhalter insb. wegen des im Legerohr auftretenden Verschleißes, bedingt durch den mit hoher Geschwindigkeit durch das geführten Walzdraht zum Austausch des Legerohres häufig ausgewechselt werden muß führt die erfindungsgemäße Möglichkeit, die Verbindung zwischen Hohlwelle und Rohrhalter mit Hilfe eines einzigen Werkzeugs, daß in einem der Regelbolzen eingesteckt alle Riegelbolzen in bzw. außer Regelposition bringt, herzustellen bzw. zu lösen, neben den schon erwähnten Vorteilen zu dem weiteren Vorteil, daß der Betrieb der Drahtwalzstraße dazu nicht oder nur kurzzeitig unterbrochen werden muß.

Die Erfindung wird anhand des in der Zeichnung dargestellten Ausführungsbeispiels näher erläutert. In der Zeichnung zeigen
- Figur 1: einen Achsialschnitt durch einen Abschnitt der Kupplung von Hohlwelle und Rohrhalter eines Windungslegers und
- Figur 2: einen Schnitt nach der Linie A-A durch Figur 1 und
- Figur 3: die Darstellung nach Figur 2 in einer anderen Position der Kupplungselemente.

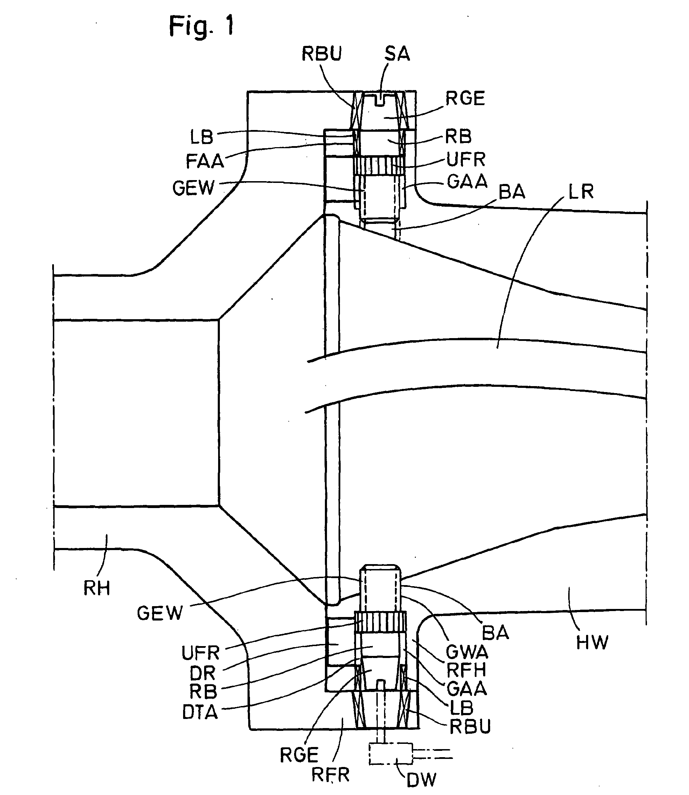

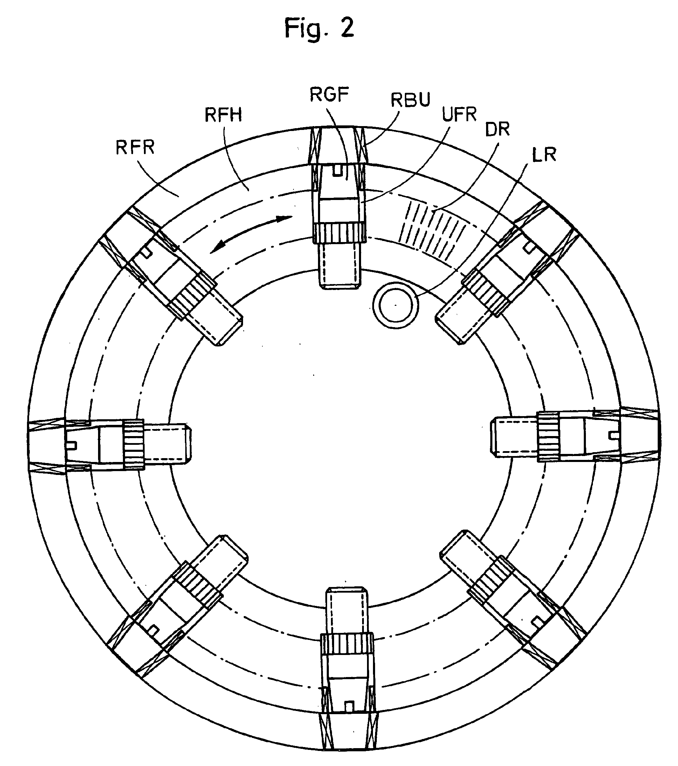

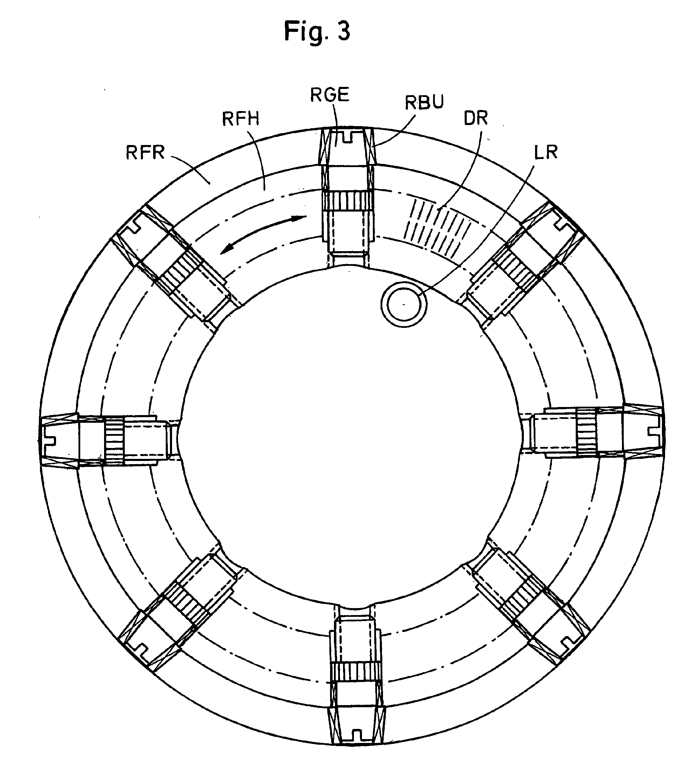

Wie aus Figur 1 zu ersehen, weist eine Hohlwelle HW einen, hier innen liegenden Ringflansch RFH auf, der in dem außen liegenden Ringflansch RFR eines das Legerohr LR tragendes Rohrhalters RH, von diesem überlappt eingeschoben ist. In dem Ringflansch RFH der Hohlwelle HW sind radial zylindrische Bohrausnehmungen BA angeordnet (vgl. auch Figur 2 und 3), die nach innen einen Gewindeabschnitt GWA, an diesem anschließend einen Glattzylinderabschnitt GAA und einen an diesen anschließenden, ebenfalls glattwandigen Führungsabschnitt FAA aufweisen. Weiter ist in diesem Ringflansch RFH ein, um die Mittenachse der Hohlwelle HW drehbar gelagerter und geführter Drehring DR mit einer, gegen die Bohrausnehmung BA gerichteten Verzahnung angeordnet. Die Wandung des glattzylindrischen Abschnitts GAA der Bohrausnehmung BA weist im Bereich dieser Verzahnung des Drehrings eine entsprechende Durchtrittsausnehmung DTA auf. Im Mündungsbereich, in dem Führungsabschnitt FAA der Bohrausnehmung BA ist eine zylindrische Lagerbüchse LB eingesetzt.

In die Bohrausnehmung BA ist ein Riegelbolzen RB mit einem, nach außen gerichteten Riegelende RGE und einem nach innen gerichteten Gewindeende GWE und einem zwischen diesen angeordneten Umfangsritzel UFR eingesetzt. Das Gewindeende GWE befindet sich dabei in dem Gewindeabschnitt GWA der Bohrungsausnehmung BA und das Riegelende RGE vor der Mündung einer, im überlappenden, außen liegenden Ringflansch FHR des Rohrhalters RA angeordneten, beidseitig, nach innen und außen offenen Riegelbuchse RBU. Die Verzahnung des Umfangsritzel UFR kämmt durch die Durchtrittsausnehmung DTA der Bohrausnehmung BA hindurch mit der Verzahnung des Drehrings DR. In der Stirnseite des Riegelendes RGE des Riegelbolzens RB ist eine Schloßausnehmung SA für das Einsetzen des, strichpunktiert angedeuteten Drehwerkzeugs DW vorgesehen.

Die Kupplung der Hohlwelle HW mit dem Rohrhalter RH wird dadurch bewirkt, daß das Drehwerkzeug DW in die Schloßausnehmung SA des Riegelendes RGE eingesetzt wird, der sich, in der in Figur 1 unten und in Figur 2 wiedergegebenen Position befindet und in dieser durch die, mit dem Drehwerkzeug DW bewirkten Drehung, geführt durch die Gewindeverbindung des Gewindeendes GWE des Riegelbolzens RB mit dem Gewindeabschnitt GWA der Bohrausnehmung BA, achsverschoben radial nach außen in die, in Figur 1 oben und in Figur 3 wiedergegebene Position eingebracht wird, in der sich das Riegelende RGE in der Riegelbuchse RBU des äußeren Ringflansches RFR des Rohrhalters befindet damit den inneren Rohrflansch RFH der Hohlwelle mit dem äußeren Ringflansch RFR des Rohrhalters kuppelt.

Die Drehbewegung des Riegelbolzens RB wird bei diesem Vorgang durch das Umfangsritzel UFR unter der durch die Kronenverzahnung möglichen gleichzeitigen Achsverschiebung auf die Verzahnung des Drehrings DR übertragen, und dieser versetzt alle weiteren, in dem inneren Ringflansch RFH der Hohlwelle HW eingesetzten Riegelbolzen RB über deren Umfangsritzel UFR in eine entsprechende Dreh- und Schließbewegung. Das Lösen der Kuppelverbindung wird analog durch Betätigen des Drehwerkzeugs DW in umgekehrter Richtung und Einfahren der Riegelbolzen RB in die, in Figur 3 wiedergegebenen Position bewirkt.

### Bezugszeichenverzeichnis

- HW: Hohlwelle
- RFH: Ringflansch (der Hohlwelle)
- RFR: Ringflansch (des Rohrhalters)
- RH: Rohrhalter
- BA: Bohrausnehmung
- GWA: Gewindeabschnitt (der Bohrausnehmung)
- GAA: Glattzylinderabschnitt (der Bohrausnehmung)
- DR: Drehring
- RB: Riegelbolzen
- RGE: Riegelende
- GWE: Gewindeende
- UFR: Umfangsritze
- RBU: Riegelbuchse
- FAA: Führungsabschnitt
- DTA: Durchtrittsausnehmung
- SA: Schloßausnehmung
- DW: Drehwerkzeug
- LB: Lagerbuchse
- LR: Legerohr

## Patentansprüche

1. Lösbare Verbindung von zylindrischen Hohlwellen (HW; RH), deren Stimenden Ringflansche (RFH; RFR) aufweisen, die, einander überlappend in Richtung der Wellenachse ineinander steckbar sind,
**dadurch gekennzeichnet,**
**daß** in den innen liegenden Ringflanschen (RFH) der beiden Ringflanschen (RFH; RFR) zwei oder mehr Riegelbolzen (RB) radial verschiebbar sind und, in den außen liegenden Ringflanschen, den jeweiligen Riegelenden (RE) der Riegelbolzen (RB) zugewandte, diese aufnehmende, beidseitig offene Riegelbuchsen (RBU) zugeordnet sind, und daß das andere Ende der Riegelbolzen (RB) in den innen liegenden Ringflanschen (RFH) gewindegeführt ist und der Riegelbolzen zwischen seinen beiden Enden ein Umfangsriztel (UFR) aufweist, dessen Zähne mit den Zähnen eines, in den innen liegenden Ringflansch (RFH) drehgelagerten, seitenverzahnten Drehrings (DR) kronenverzahnt kämmen, wobei die, nach außen weisenden Stirnseiten der Riegelenden (RBE) der Riegelbolzen Schloßausnehmungen (SA) für das Einsetzen von Drehwerkzeugen (DW) zur Drehung der Riegelbolzen um deren Längsachse aufweisen.

2. Lösbare Verbindung nach Anspruch 1,
**dadurch gekennzeichnet,**
**daß** bei einem Windungsleger für, aus einer Walzdrahtstraße herangeführten Walzdraht, der aus einer rotierend angetriebenen Hohlwelle (HW) und einem stirnseitig, lösbar mit dieser gekuppelten zylinder- oder trichterförmigen Rohrhalter (RH) besteht, in dem der Walzdraht mit Hilfe eines spiralförmigen Legerohrs (LR) zu aufeinander folgenden Drahtwindungen geformt wird, Hohlwelle (HW) und Rohrhalter (RH), einander überlappende Ringflansche (RFH; RFR) aufweisen, wobei die Riegelbolzen (RB) und der, mit deren Umfangszahnritzel (UZR) kämmende Drehring (DR) im Ringflansch (RFH) der Hohlwelle (HW) und die Riegelbuchsen (RBU) in dem Ringflansch (RFR) des Rohrhalters (RH) angeordnet sind.
